## Europäisches Patentamt
## European Patent Office
## Office européen des brevets

(19)

(11) Numéro de publication : **0 306 374 B1**

(12)

# FASCICULE DE BREVET EUROPEEN

(45) Date de publication du fascicule du brevet :
**22.05.91 Bulletin 91/21**

(51) Int. Cl.⁵ : **B60N 2/02, B60N 2/12**

(21) Numéro de dépôt : **88402021.5**

(22) Date de dépôt : **03.08.88**

(54) **Mécanisme à mémoire simple comportant un vérin mécanique pour la manoeuvre de basculement sur l'avant d'un siège de véhicule.**

(30) Priorité : **06.08.87 FR 8711194**

(43) Date de publication de la demande :
**08.03.89 Bulletin 89/10**

(45) Mention de la délivrance du brevet :
**22.05.91 Bulletin 91/21**

(84) Etats contractants désignés :
**AT BE CH DE ES GB GR IT LI LU NL SE**

(56) Documents cités :
**EP-A- 0 120 817
DE-A- 3 244 922
FR-A- 2 556 946
US-A- 3 741 511**

(73) Titulaire : **A. & M. COUSIN Etablissements
COUSIN FRERES
Le Bois de Flers
F-61103 Flers Cédex Orne (FR)**

(72) Inventeur : **Pipon, Yves
La Garenne St. georges des Groseillers
F-61100 Flers (FR)**
Inventeur : **Droulon, Georges
Rue de la Garenne St Georges des Groseillers
F-61100 Flers (FR)**

(74) Mandataire : **Madeuf, Claude Alexandre Jean
et al
CABINET MADEUF 3, avenue Bugeaud
F-75116 Paris (FR)**

EP 0 306 374 B1

## Description

Dans les véhicules automobiles actuels, l'équipement en glissières latérales de l'assise d'un siège nécessite la création d'un ensemble complexe et donc coûteux, ce d'autant plus que le coût est double puisque les véhicules comportent tous deux des sièges indépendants à l'avant.

La situation est encore plus grave pour les véhicules à deux portes nécessitant l'emploi de mécanismes compliqués, délicats et donc coûteux pour chaque siège afin de pouvoir les faire basculer vers l'avant du véhicule sur le volant pour livrer passage aux passagers devant s'asseoir sur la banquette arrière du véhicule.

Ce dernier mécanisme doit également être conçu pour permettre une grande sécurité dans le cas d'accident.

Actuellement, pour les véhicules automobiles de bas de gamme, il est donc nécessaire de mettre au point des mécanismes ayant des fonctions identiques à celles destinées aux sièges de voitures de luxe mais d'un prix de revient notamment moindre.

On est donc amené à supprimer tout mouvement qui engendre des parties de mécanisme supplémentaires et donc coûteux.

Les recherches récentes du moindre coût font apparaître la nécessité d'un siège basculant pour permettre un passage aisé aux places arrière d'un véhicule à deux portes et donc de prévoir un ensemble dit "à trois points" conçu de façon à réaliser deux points de liaison à l'arrière du siège et un troisième point situé à l'avant du siège et dans son axe longitudinal. Cette solution à trois points assure une bonne sécurité par un bon maintien du siège sur le plancher du véhicule.

Pour éviter, lors du basculement du siège vers l'avant, qu'une partie du mécanisme de positionnement devienne saillante à l'arrière du siège, on est amené a étudier et employer un petit mécanisme a mémoire devant impérativement demeurer sous l'assise du siège lorsque ce dernier est basculé vers l'avant.

La présente invention a donc pour objet de réaliser un mécanisme à mémoire simple incorporant un vérin mécanique pour la manoeuvre de basculement vers l'avant du siège de véhicule qui comporte un petit boîtier maintenant un arbre solidaire d'une vis à pas réversible, ce petit boîtier étant fixé, par l'intermédiaire d'un coffrage ou directement sur le plancher de la carrosserie du véhicule dans la zone centrale inférieure du siège tandis qu'une barrette-crémaillère est solidaire du dessous de l'assise du siège sans présenter dans les positions extrêmes du siège de dépassement de ce dernier.

De par l'utilisation d'une vis à pas réversible, il est possible très facilement de réaliser un ensemble de remise en position choisie au préalable soit manuellement soit à l'aide d'un petit moteur.

Après cette étude, trois principes se dégagent :

a) retour en position choisie par un ensemble mécanique,

b) retour en position choisie par utilisation de moyens électromécaniques,

c) retour en position choisie sous contrôle d'un circuit électronique.

Les deux points de liaison à l'arrière du siège sont réalisés par des bras pivotants de chaque organe de maintien et comportent une mémoire de positionnement.

On connaît déjà par le document FR-A-2 556 946 un mécanisme à mémoire simple comportant un élément mécanique pour la manoeuvre de basculement vers l'avant d'un siège de véhicule, ledit siège présentant au moins un levier coopérant avec deux bras parallèles articulés, d'une part, à la partie arrière de l'assise et, d'autre part, sur le plancher du véhicule par l'intermédiaire d'un axe portant une mémoire.

Conformément à l'invention, le mécanisme est caractérisé par une barrette-crémaillère montée sous l'assise du siège dans son axe médian longitudinal et par un verrou mécanique, cette barrette-crémaillère coopérant avec un boîtier articulé sur le plancher du véhicule par l'intermédiaire d'un coffrage et d'une ferrure, ce boîtier contenant un organe moteur blocable, et ladite mémoire étant constituée par une bague présentant une encoche qui coopère avec un bec d'un premier levier qui est articulé sur lesdits bras et commandé par un organe de commande unique relié audit premier levier et audit verrou mécanique par des câbles Bowden.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une élévation latérale schématique du siège équipé d'un mécanisme à mémoire simple comportant un vérin mécanique pour la manoeuvre de basculement vers l'avant d'un siège de véhicule à deux portes.

La fig. 2 est une élévation partielle à plus grande échelle de la barrette-crémaillère centrale équipée de la vis réversible avec son organe de blocage.

La fig. 3 est une coupe suivant la ligne III-III de la fig. 2.

La fig. 4 est un plan correspondant à la fig. 2,

La fig. 5 est une élévation latérale, à plus grande échelle, de la partie inférieure d'un des bras supportant l'arrière du siège.

La fig. 6 est une coupe suivant la ligne VI-VI de la fig. 5.

La fig. 7 est une élévation latérale schématique du siège basculé vers l'avant vers le volant pour permettre le passage des passagers à l'arrière du véhicule.

La fig. 8 est une élévation latérale schématique d'une deuxième forme de réalisation du siège équipé d'un mécanisme à mémoire simple mais à commande électromécanique.

La fig. 8a est une vue, à plus grande échelle, de la partie supérieure de la fig. 8.

La fig. 9 est une élévation latérale, à plus grande échelle, de la partie inférieure d'un des bras maintenant l'arrière du siège et représentant le mécanisme à mémoire.

La fig. 10 est une coupe suivant la ligne X-X de la fig. 9.

La fig. 11 montre le siège en position basculée vers l'avant pour le passage d'un passager vers la banquette arrière du véhicule à deux portes.

La fig. 12 est une élévation latérale schématique d'un siège muni du mécanisme à mémoire simple comportant une commande électronique.

La fig. 12a est une vue, à plus grande échelle, de la partie supérieure de la fig. 12.

La fig. 13 est une élévation latérale schématique du siège de la fig. 12 basculé vers l'avant pour permettre le passage d'un passager vers la banquette arrière d'un véhicule à deux portes.

La fig. 14 est une élévation schématique d'une variante de réalisation du mécanisme à mémoire simple, la partie inférieure de la ferrure d'articulation faisant partie intégrante des bras de pivotement.

La fig. 15 est une élévation schématique d'une variante de réalisation du mécanisme à mémoire munie d'une ferrure d'articulation.

Les fig. 16 et 17 sont des vues orthogonales partielles de la partie inférieure latérale de la commande du siège de la fig. 15.

La fig. 18 est une élévation schématique d'une variante de réalisation du mécanisme à mémoire de la fig. 15.

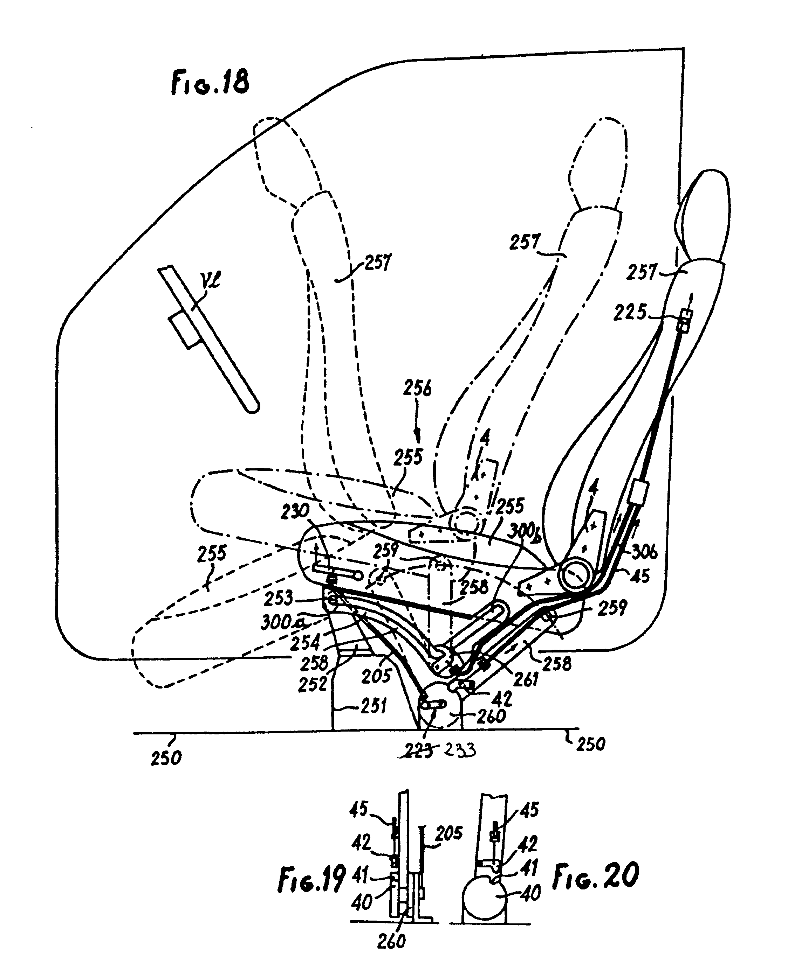

Les fig. 19 et 20 sont des vues orthogonales partielles de la partie inférieure latérale du siège de la fig. 18.

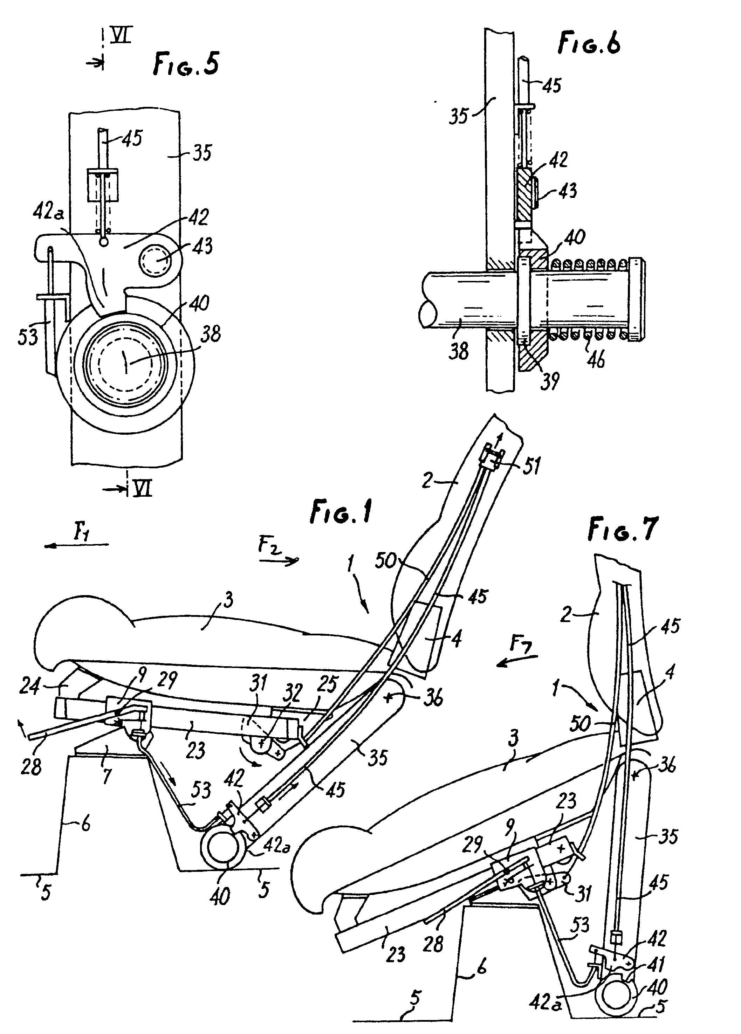

A la fig. 1, on a représenté schématiquement un siège 1 destiné à être monté à l'avant d'un véhicule à deux portes soit à la place du conducteur, soit à la place du passager puisque les deux sièges avant doivent basculer totalement vers l'avant pour dégager le passage à droite et à gauche du véhicule permettant ainsi aux passagers des places arrière soit de s'asseoir sur la banquette arrière soit de sortir du véhicule.

Le siège 1 comporte un dossier 2 et une assise 3 d'un type connu et qui ne nécessite aucune description.

La liaison entre l'assise 3 et le dossier 2 se fait à l'aide d'au moins un mécanisme d'articulation 4 permettant le réglage de l'inclinaison du dossier 2 par rapport à l'assise 3 comme cela est maintenant bien connu. Ces mécanismes de réglage de l'inclinaison du dossier 2 sont de types connus et désignés ci-après par l'expression "ferrure d'articulation".

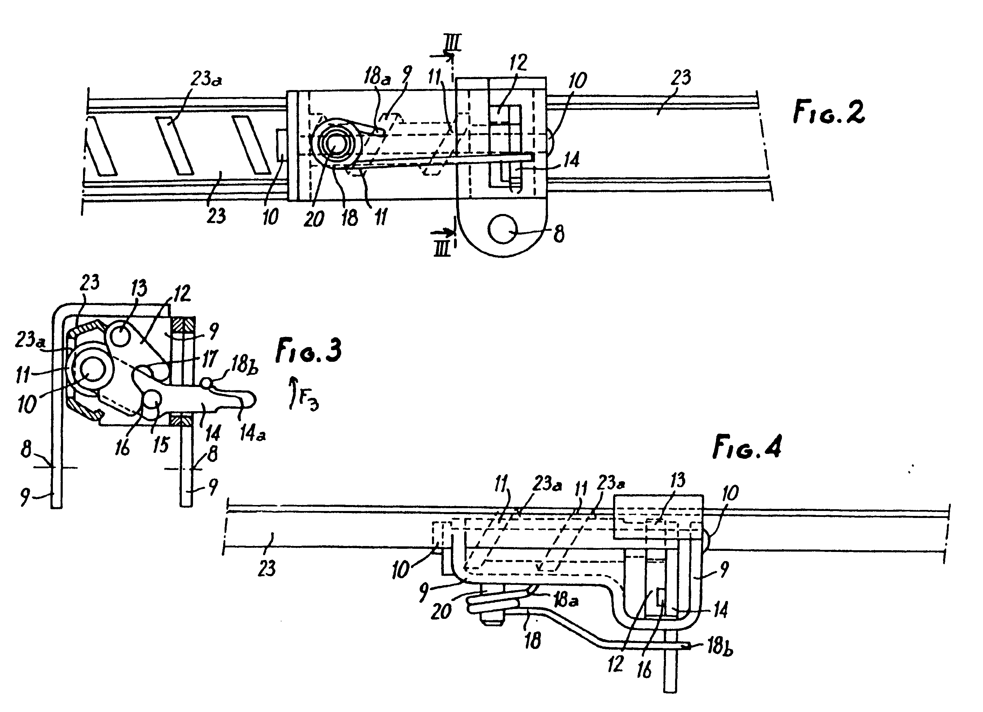

Comme on peut le voir à la fig. 1, le plancher 5 de la carrosserie du véhicule comporte un coffrage 6 débordant verticalement placé sur l'avant et qui supporte une ferrure 7 qui est placée de façon à se trouver dans l'axe médian longitudinal du siège 1. La ferrure 7 porte un axe 8 autour duquel peut tourner un boîtier 9 (voir fig. 2, 3 et 4) qui contient intérieurement un arbre 10 sur lequel est montée une vis sans fin réversible 11.

Cette vis sans fin 11 qui peut être freinée par l'intermédiaire d'un sabot 12 peut tourner sur un axe 13 solidaire du boîtier 9. Le sabot 12 est maintenu en place par un levier 14 articulé sur l'arbre 10 contenu dans le boîtier 9, et un axe 15, fixe dans la zone centrale du levier 14, appuie normalement contre un prolongement 16 du sabot 12 qui présente, derrière ce prolongement 16, un évidement 17 produisant l'effet de blocage par came.

Finalement, un ressort 18, fixé par son extrémité 18a sur le boîtier 9 maintenu par enroulement sur un axe 20 solidaire du boîtier 9, appuie par son extrémité 18b dans une encoche 14a sur le levier 14 en bloquant ainsi, par l'intermédiaire du sabot 12, la vis sans fin réversible 11. Cette dernière coopère avec une barrette-crémaillère 23 pouvant coulisser à l'intérieur du boîtier 9 de façon que la vis sans fin réversible engrène avec les ouvertures 23a prévues sur la face verticale de la barrette-cremaillère 23.

Comme la barrette-crémaillière 23 est fixée par l'intermédiaire d'une potence 24 sous l'extrémité avant de l'assise 3 et par une équerre 25 sous l'extrémité arrière de l'assise 3, il est donc possible, lorsque la vis sans fin réversible 11 est libérée du sabot 12, de faire coulisser la barrette-crémaillère 23 soit vers l'avant (flèche $F_1$, fig. 1) soit vers l'arrière (flèche $F_2$, fig. 1). Tant la potence 24 que l'équerre 25 sont disposées dans l'axe médian longitudinal du siège 1.

La libération du sabot 12, par l'intermédiaire du pivotement dans le sens de la flèche $F_3$ (fig. 3) du levier 14 contre l'action du ressort 18 s'effectue habituellement par un levier 28 monté pivotant sur un axe 29 solidaire du boîtier 9 (voir fig. 1).

Il y a lieu également de remarquer un verrou 31 escamotable articulé sur un axe 32, solidaire du prolongement inférieur de l'équerre 25, et coopérant avec la barrette-crémaillère 23 pour former une butée afin de permettre une utilisation normale du siège ; au-delà de cette butée, la course utilisable n'est plus admissible et n'est utilisée que pour le basculement complet vers l'avant pour permettre le passage aux utilisateurs des sièges arrière.

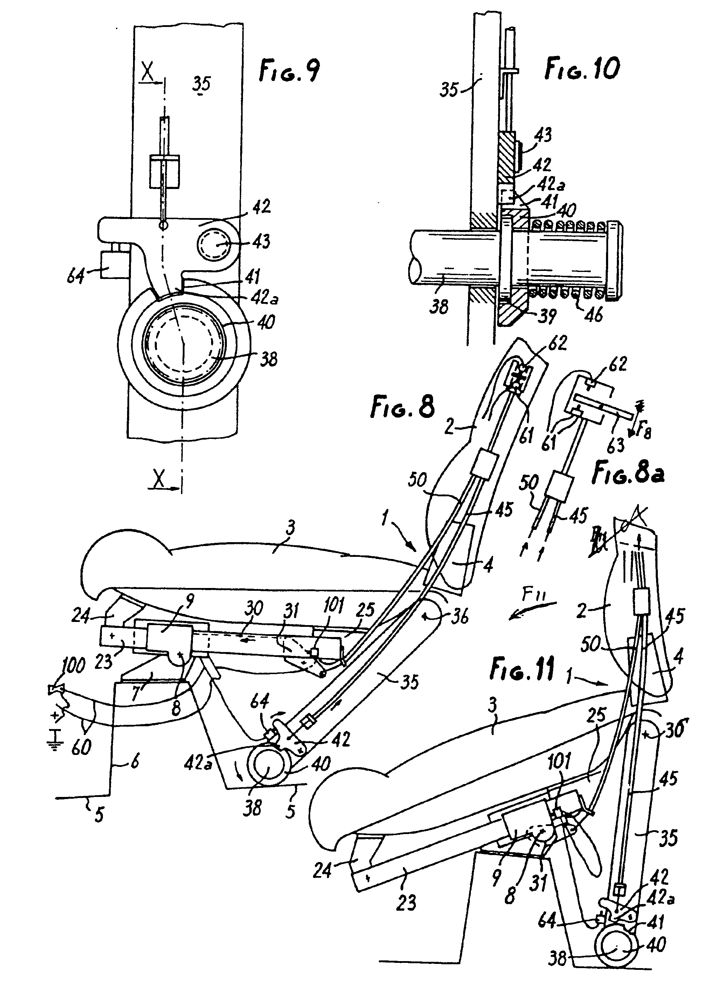

Dans le cas de la fig. 1, la zone arrière de l'assise 3 du siège 1 est maintenue de chaque côté par des bras 35 articulés à leur partie supérieure 36 sur un axe solidaire du dessous de l'assise 3 et à leur partie inférieure chacun sur un axe 38 portant par l'intermédiaire d'une collerette 39, une bague 40 présentant une encoche 41 destinée à coopérer avec un levier 42 pivotant autour d'un axe 43 solidaire du bras 35. Le levier 42 présente un bec 42a pénétrant normalement dans l'encoche 41 pour verrouiller chaque bras 35 en position inclinée comme représenté à la fig. 5. Ainsi, la position normale du siège est mémorisée et bloquée mais il est possible, à l'aide d'une commande mécanique constituée par un câble Bowden 45, de déverrouiller le levier 42 et de dégager ainsi le bec 42a de l'encoche 41 permettant, de ce fait, la rotation aisée mais contrôlée de chaque bras 35 puisque cette rotation est soumise à la pression du ressort 46 agissant par pression sur la bague 40, ce ressort 46 étant centré sur l'axe 38 (voir fig. 6).

De même, le verrou 31 est commandé par un câble Bowden 50 relié à la commande unique 51 placée à la partie supérieure du dossier 2 (voir fig. 1).

Le mouvement de pivotement du levier 42 provoque, par l'intermédiaire du câble Bowden 53, le dégagement du sabot 12 par pivotement du levier 14 contre l'action du ressort 18 comme cela est représenté aux fig. 3 et 7.

Ainsi, la vis sans fin réversible 11 se trouve libérée en même temps que les bras 35 et on peut très aisément, du fait que le verrou pivotant 31 est également dégagé, faire pivoter vers l'avant, dans le sens de la flèche F7 (fig. 7) le siège afin de permettre aux personnes désirant pénétrer à l'arrière du véhicule à deux portes ou désirant en sortir de passer aisément sans être gênées ni par l'assise ni par le dossier du siège considéré.

Lorsque l'on désire ramener le siège 1 de la position de la fig. 7 à celle de la fig. 1, il suffit de basculer le siège vers l'arrière, les bras 35 reprenant leur position première, les leviers 42 verrouillant les bras 35 en position assise du siège et la barrette-crémaillère 23 reprenant sa place.

A ce moment, le sabot 12 bloque de nouveau la vis sans fin réversible 11 : le siège est donc parfaitement verrouillé et sécurisé. Simultanément le verrou 31 reprend sa place pour limiter la course normale d'utilisation.

On peut donc fixer sur ce siège d'une manière connue en soi la ceinture de sécurité.

L'ensemble des pièces mobiles barrette-crémaillère 23, bras 35 et les articulations coopérantes est calculé et prévu pour maintenir le siège en position correcte en cas de chocs avant-arrière ou latéraux de façon à assurer la sécurité du ou des passagers.

Le retour en position d'utilisation se fait rapidement par le simple poids du siège 1.

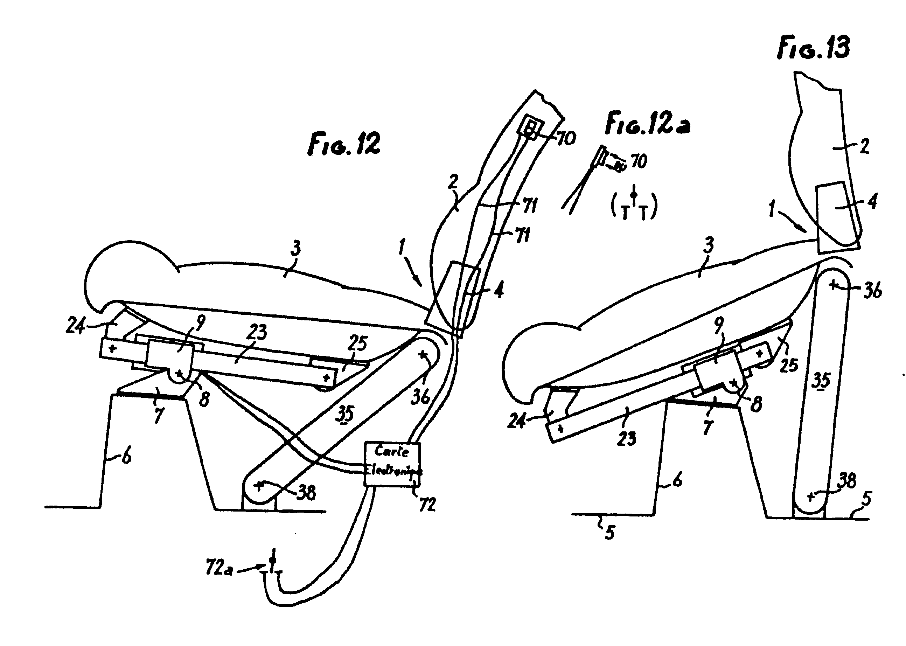

Aux fig. 8 à 11, le dispositif de pivotaient du siège 1 comporte les mêmes références puisque les organes sont strictement les mêmes mais le boîtier 9 contient un moteur électrique qui entraîne en rotation la vis sans fin réversible 11. L'alimentation du moteur (non représenté) se fait à travers des conducteurs 60, cette alimentation étant controlée par deux micro-interrupteurs 61, 62 (voir fig. 8a) placés à la partie supérieure du dossier 2. De ce fait, lorsqu'en manoeuvrant le levier 63 correspondant à la commande unique 51 de la fig. 1 vers le bas c'est-à-dire dans le sens de la flèche F8 (fig. 8a) on ferme par l'intermédiaire du micro-interrupteur l'alimentation du moteur contenu dans le boîtier 9, ce qui a pour effet, comme dans le cas précédent, de faire pivoter le siège dans le sens de la flèche F11 (voir fig. 11). En même temps, le déverrouillage du levier 42 provoque la fermeture du micro-interrupteur 64 contrôlant également le circuit d'alimentation du moteur du boîtier 9 (fig. 11) ; le verrou de positionnement 31 se retire sous l'action du câble 50.

Lorsque l'on désire rétablir la position normale du siège représentée à la fig. 8, l'inversion du pivotement du levier 63 provoque par l'intermédiaire du micro-interrupteur 62 l'alimentation du moteur contenu dans le boîtier 9 mais en sens inverse et lorsque le siège a repris sa position première comme expliqué dans le cas des fig. 1 à 7, l'alimentation du moteur du boîtier 9 est coupée puisque le micro-interrupteur 64, coopérant avec le levier 42, ouvre le circuit d'alimentation de ce moteur c'est-à-dire au moment où le bec 42a du levier 42 pénètre dans l'encoche 41 de la bague 40 (position représentée à la fig. 8). A ce moment, les organes sus-décrits du siège ont repris leur position d'origine et le siège a retrouvé la position choisie au préalable. Un nouveau réglage pour un autre utilisateur se fait par l'action entreprise sur le bouton 100 qui commande le moteur par l'intermédiaire des fils 60.

En ce qui concerne la réalisation des fig. 12, 12a et 13, il est prévu en haut du dossier 2 (voir fig. 12 et 12a) un interrupteur inverseur 70 qui permet l'alimentation du moteur du boîtier 9 comme expliqué précédemment dans le cas des fig. 9 à 11. Cependant comme le circuit électrique 71 d'alimentation de ce moteur électrique passe à travers une carte électronique 72 pouvant comporter une mémoire ; l'ensemble des opérations se fait automatiquement. Ainsi, il suffit simplement d'inverser l'interrupteur 70 pour obtenir d'abord le pivotement vers l'avant du siège (voir fig. 13) ou au contraire ramener ce siège à sa position normale (voir fig. 12).

La carte électronique 72 lorsqu'elle comporte une mémoire permet de limiter la course utile de la barrette-crémaillère 23 et cette carte électronique 72 comporte un interrupteur 72a permettant de modifier le contenu de la mémoire afin d'obtenir un réglage longitudinal du siège suivant la volonté de son occupant.

Dans le cas des fig. 12 et 13, il est possible que l'interrupteur inverseur 70 ainsi que l'interrupteur de mémoire 72a soient placés à différents endroits de l'habitacle de la voiture afin de faciliter la manipulation du siège considéré soit par les passagers assis à l'arrière du véhicule, soit pour le conducteur ou le passager assis à l'avant du véhicule.

Il y a lieu de remarquer également que, dans le cas de la fig. 8, il est possible de remplacer dans la barrette-crémaillère 23 le verrou pivotant 31 par deux interrupteurs de fin de course pouvant être déplacés manuellement. Un interrupteur de fin de course arrière 101 est représenté à la fig. 8, le même interrupteur se trouvant normalement sous l'avant de l'assise 3 du siège.

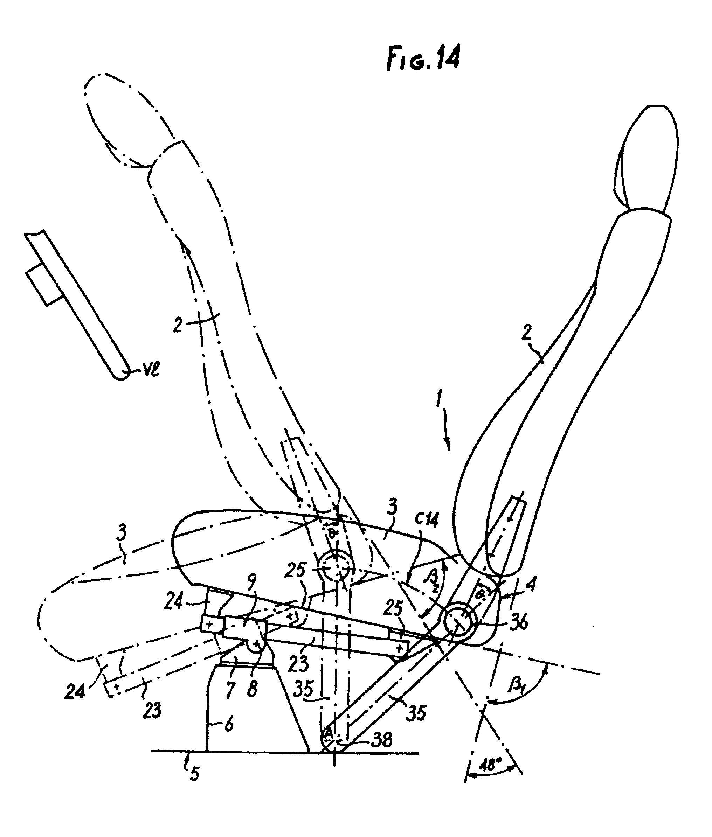

Dans le cas de la fig. 14, la partie avant du mécanisme à mémoire simple est identique aux cas précédents et ces mêmes éléments portent donc les mêmes références.

En ce qui concerne les bras arrière 35, bien que ceci ne soit pas représenté à la fig. 14, chacun d'eux comprend la mémoire de position déjà décrite en relation avec la fig. 1 et qui est constituée par la bague 40, son encoche 41 et le levier 42 à bec 42a ; ces bras arrière sont fixés à leur partie supérieure directement sur l'axe d'articulation du dispositif de réglage de l'inclinaison du dossier 2 (ferrure d'articulation) par rapport à l'assise 3. Plus particulièrement chaque levier 35 est solidaire de la ferrure fixe d'assise de l'articulation assise-dossier ce qui fait que la courbe C14 de déplacement du point central des bras 35 a une forme circulaire plus évoluée permettant ainsi de passer d'un angle de sensiblement 29° dans le cas des fig. 1 à 13 pour le pivotement de l'ensemble du siège à un angle de presque 50° dans le cas de la fig. 14. Ce phénomène est dû uniquement au fait de la compensation des valeurs angulaires des points de fixation du chariot 9 par rapport aux bras 35 ainsi que de la liaison bras 35 avec les ferrures de l'élément fixe de l'articulation assise-dossier. Le réglage pour le choix des positions pour chacun des utilisateurs s'obtient par l'intervention sur le bouton 72a (voir fig. 12).

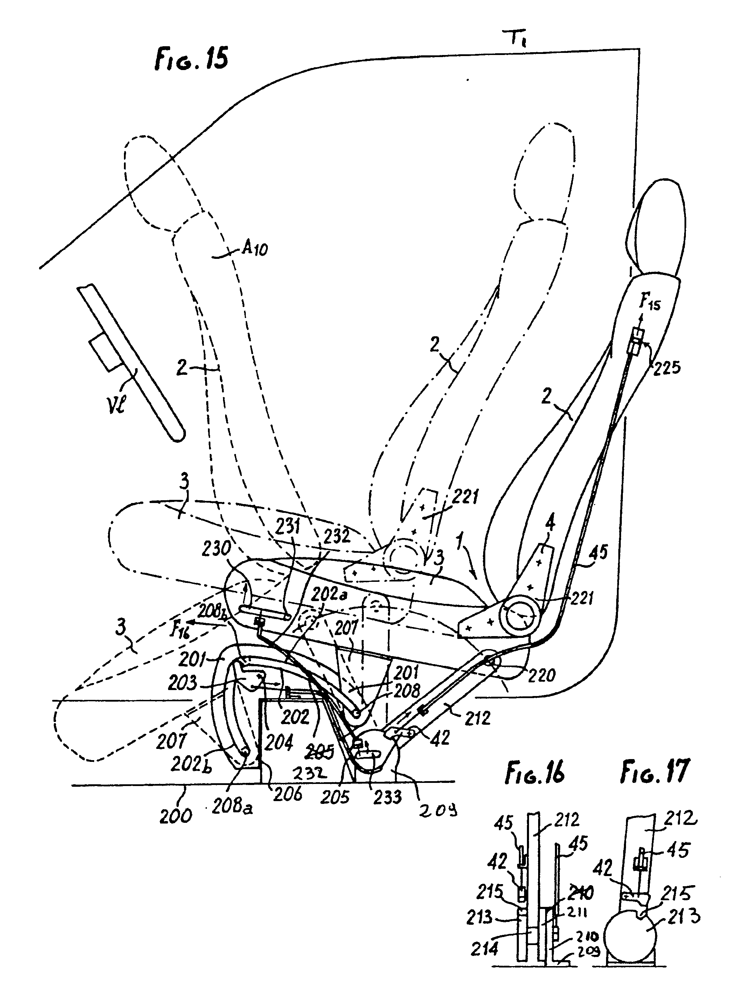

A la fig. 15, le plancher 200 porte, comme déjà indiqué précédemment, dans la zone avant un coffrage 206 sur lequel vient se fixer dans l'axe longitudinal médian du siège une pièce 201 affectant la forme d'un flasque en cœur percé d'une fenêtre courbe 202 présentant d'abord un parcours montant 202a puis dans la partie avant un parcours descendant 202b. Un verrou 203 est monté pivotant sur un axe 204 et est relié par un câble Bowden 205 au levier 42. L'assise 3 du siège 1 porte, à sa partie inférieure, une équerre 207, à la partie inférieure de laquelle est fixé un axe 208 pouvant se déplacer dans la fenêtre courbe 202. Derrière le coffrage 206 est monté un support 209 portant le flasque fixe 210 d'une ferrure d'articulation dont le flasque mobile 211 est solidaire d'un bras 212 (voir fig. 16 et 17). Le flasque mobile 211, le bras 212 et une bague mémoire 213, identique à la bague 40, sont reliés rigidement les uns aux autres par un axe 214 (voir fig. 16).

La bague 213 porte une encoche 215 identique à l'encoche 41 précédente. Le levier 212 porte également le levier 42 avec sa commande par câble Bowden 45.

Comme dans le cas précédent des fig. 1 à 13, les deux bras arrière 212 sont montés sur un axe commun 220. La ferrure d'articulation constituée par les flasques fixes 210 et 211 est commandée en rotation par un moteur non représenté et il y a lieu d'indiquer que, pour chaque siège, il peut y avoir une seule ferrure d'articulation ou deux ferrures d'articulation placées sur l'un ou sur les deux bras 212 à leur partie inférieure. L'assise 3 et le dossier 2 sont reliés l'un à l'autre par une autre ferrure d'articulation 221 permettant le réglage en inclinaison du dossier 2 par rapport à l'assise 3 du siège 1. On a indiqué schématiquement par le trait T1 l'ouverture de la carrosserie normalement fermée par la portière et V1 désigne le volant du véhicule.

Comme cela est très visible à la fig. 15, lorsque l'on désire faire passer le siège de la position représentée en traits pleins à cette figure, position dans laquelle le siège peut être utilisé par le conducteur ou le passager, dans la position de dégagement total, position en traits interrompus en $A_{10}$ (fig. 15), on est amené comme dans les cas précédents à manoeuvrer le bouton 225 vers le haut (flèche $F_{15}$, fig. 15) ce qui a pour effet, d'une part, de déverrouiller le levier 42 et, d'autre part, d'abaisser simultanément le verrou 203 dans le sens de la flèche $F_{16}$ (fig. 15).

Cette manoeuvre provoque également par un circuit non représenté l'alimentation du moteur d'entraînement de la ou des ferrures d'articulation 210, 211 entraînant ainsi en rotation les bras 212 vers l'avant et le déplacement de l'axe 208 dans la fenêtre courbe 202 d'abord dans la partie 202a puis ensuite dans la partie descendante 202b pour amener cet axe 208 dans la position inférieure 208a (voir fig. 15).

Ainsi, le siège dégage complètement l'espace nécessaire aux passagers pour pénétrer à l'intérieur de la partie arrière du véhicule à deux portes considéré.

En manoeuvrant le bouton 225 dans le sens inverse de la flèche $F_{15}$ et sous l'action du moteur d'entraînement de la ou des ferrures d'articulation 210, 211, on peut ramener le siège de sa position $A_{10}$ à sa position normale représentée en traits pleins à la fig. 15.

Cependant afin de permettre un réglage aisé de l'assiette du siège 3, il est possible également, à l'aide du levier 230 placé sur l'un des côtés du siège, par exemple entre les deux sièges avant, levier tournant autour d'un axe 231, de commander par l'intermédiaire d'un câble Bowden 232 un petit levier 233 qui provoque l'alimentation du moteur électrique d'entraînement des ferrures d'articulation 210, 211 et ainsi de faire pivoter d'un certain angle les bras 212 avec coulissement de l'axe 208 dans la partie supérieure 202a

de la fenêtre courbe 202 et d'obtenir une position de l'assise convenable pour le passager ou le conducteur.

Le relâchement du levier 230 provoque l'arrêt de l'alimentation du moteur de commande des ferrures d'articulation précitées et, de ce fait, le blocage de celles-ci dans la position choisie.

Ce mouvement est de toute façon limité par le verrou 203 car au maximum l'axe 208 peut arriver lors du réglage de l'assiette de l'assise du siège en position 208b (voir fig. 15).

L'axe 208 est en général réalisé en un métal gras ou en une matière plastique grasse facilitant le déplacement de cet axe dans la fenêtre courbe 202 qui peut comporter, surtout sur son pourtour inférieur, des lèvres débordantes facilitant, d'une part, le bon guidage de l'axe 208 et, d'autre part, son coulissement harmonieux continu et sans à-coup.

A la fig. 18, le plancher 250 du véhicule porte comme déjà indiqué précédemment dans la zone avant un coffrage 251 au sommet duquel est fixée une équerre 252 portant un axe 253 qui pénètre à travers une fenêtre 300 en V percée dans un flasque 254 solidaire du dessous de l'assise 255 du siège 256 dont le dossier est désigné par 257. Les branches 300a et 300b du V sont inégales, l'une 300a étant légèrement courbe et l'autre 300b étant rectiligne.

Comme précédemment le dossier 252 est articulé sur l'assise 255 par une ferrure d'articulation 4. L'arrière du siège est maintenu par deux bras 258 articulés à leur partie supérieure sur un axe 259 et à leur partie inférieure chacun sur une ferrure d'articulation 260 qui peut être une articulation à blocage par crans c'est-à-dire avec des grains coulissants ou une articulation micrométrique continue motorisée.

Les autres organes permettant le débattement du siège étant identiques à ceux de la fig. 15 portent les mêmes références.

Le fonctionnement de ce mécanisme de siège est identique à celui de la fig. 15 mais le verrou 261 qui est placé en face du fond de la fenêtre 300 en V entre les deux branches de celui-ci permet dans la branche avant 300a le réglage longitudinal du siège 256 et, lorsque le verrou 261 est effacé sous l'action du bouton de manoeuvre 225, l'axe 253 peut se déplacer dans la branche 300b de la fenêtre 300 en V pour faire basculer le siège complètement sur l'avant contre le volant V1 afin de dégager un espace suffisant pour permettre l'entrée ou la sortie du ou des passagers assis sur la banquette arrière du véhicule considéré.

Il est rappelé cependant que les ferrures d'articulation 210, 211 (voir fig. 15) peuvent également être des articulations à blocage par crans ou grains coulissants ou micrométriques continues motorisées.

## Revendications

1. Mécanisme à mémoire simple comportant un élément mécanique pour la manoeuvre de basculement vers l'avant d'un siège de véhicule, ledit siège présentant au moins un levier (42) coopérant avec deux bras parallèles (35) articulés, d'une part, à la partie arrière (36) de l'assise et, d'autre part, sur le plancher (5) du véhicule par l'intermédiaire d'un axe (38) portant une mémoire, caractérisé par une barrette-crémaillère (23) montée sous l'assise (3) du siège dans son axe médian longitudinal et un verrou mécanique (31), cette barrette-crémaillère (23) coopérant avec un boîtier (9) articulé sur le plancher (5) du véhicule par l'intermédiaire d'un coffrage (6) et d'une ferrure (7), ce boîtier contenant un organe moteur blocable (11), et en ce que ladite mémoire est constituée par une bague (40) présentant une encoche (41) qui coopère avec un bec (42a) d'un premier levier (42) qui est articulé sur lesdits bras et commandé par un organe de commande unique (51) relié audit premier levier (42) et audit verrou mécanique (31) par des câbles Bowden (45, 50).

2. Mécanisme suivant la revendication 1, caractérisé en ce que l'organe moteur blocable monté dans le boîtier (9) est une vis sans fin réversible (11) roulant dans la barrette-crémaillère (23), cette vis sans fin étant montée sur un arbre (10) et étant bloquée normalement par un sabot (12) soumis à l'action d'un second levier (14) monté sur ledit arbre et maintenu en position de blocage par un ressort (18).

3. Mécanisme suivant la revendication 2, caractérisé en ce que l'organe moteur blocable commandant la rotation de la vis sans fin réversible (11) est un moteur électrique dont l'alimentation est assurée par un troisième levier (63) appartenant audit organe de commande unique auquel sont accouplées les extrémités des câbles Bowden (45, 50) commandant le verrou (31) et le levier (42).

4. Mécanisme suivant l'une des revendications 2 ou 3, caractérisé en ce que l'organe moteur blocable commandant la rotation de la vis sans fin réversible (11) est un moteur électrique qui est soumis au contrôle d'une carte électronique (72) à mémoire, cette carte étant reliée audit organe de commande unique en permettant au siège d'être déplacé d'arrière en avant et d'avant en arrière à l'aide d'un interrupteur inverseur (70).

5. Mécanisme suivant l'une des revendications 1 à 4, caractérisé en ce que le siège comprend en outre un dossier qui est relié à l'assise et auxdits bras par l'intermédiaire d'une tige d'articulation commune (36) en permettant ainsi au siège d'être amené dans une position très proche du volant V1 lors du mouvement vers l'avant de ce siège (1) afin de dégager un espace suffisant pour le déplacement des passagers.

6. Mécanisme suivant l'une des revendications 2 à 5, caractérisé en ce que la vis sans fin (11) est commandée manuellement.

7. Mécanisme suivant l'une des revendications 2 à 6, caractérisée en ce que la vis sans fin (11) est commandée par l'intermédiaire d'un moteur.

8. Mécanisme suivant la revendication 1, caractérisé en ce que les bras (212) sont articulés à leur partie inférieure sur des ferrures d'articulation (210, 211) à commande motrice et il est prévu dans la zone centrale de l'axe médian longitudinal de l'assise (3) du siège (1) une équerre (207) portant à sa partie inférieure un axe (208) qui se déplace dans une fenêtre courbe (202) percée dans une pièce (201) en forme de c ur, cette pièce (201) étant montée sur un support solidaire d'un coffrage (206) du plancher (200) du véhicule de façon à amener le siège d'une position normale à une position pivotée totalement vers l'avant A 10 pour dégager l'espace permettant l'entrée et la sortie des passagers arrière des sièges du véhicule puis il est prévu un verrou pivotant (203) limitant dans la partie supérieure (202a) de la fenêtre courbe (202) le déplacement longitudinal du siège considéré sans risque de pivotement intempestif de l'axe (208) dans la partie inférieure (202b) de la fenêtre (202), l'ensemble de commande du siège étant réalisé, pour le pivotement total, à l'aide d'un bouton de manoeuvre (225) commandant par le câble Bowden (45) le premier levier (42) de la mémoire et donc la position de l'assise et la position pivotée du siège pour le dégagement, et simultanément par un second câble Bowden (205) le dégagement du verrou (203) ; puis le réglage de l'assiette de l'assise (3) du siège étant prévu par l'intermédiaire d'un troisième câble Bowden (232) à partir d'un levier de manoeuvre (230) afin d'assurer la rotation à l'aide d'un organe moteur des ferrures d'articulation (210, 211).

9. Mécanisme suivant la revendication 8, caractérisé en ce que le plancher (250) du véhicule porte le coffrage (251) sous la zone avant du siège considéré (256), ce coffrage maintenant à sa partie supérieure une équerre (252) supportant un axe (253) pouvant se déplacer dans les branches (300a, 300b) d'une fenêtre (300) percée dans un flasque (258) solidaire du dessous de l'assise (255) du siège (256), le fond de la fenêtre (300) en V à branches inégales courbe et rectiligne (300a, 300b) étant normalement occupé par le verrou mobile (261) commandé par l'intermédiaire d'un quatrième câble Bowden (306) relié au bouton de manoeuvre (225).

## Claims

1. Simple memory mechanism comprising a mechanical element for the tilting movement maneuvering towards the front of a vehicle seat, said seat having at least one lever (42) cooperating with two parallel arms (35) pivotally mounted, on the one hand, onto the rear part (36) of the base plate and, on the other hand, onto the floor (5) of the vehicle by means of a spindle (38) carrying a memory means, characterized by a rack rod (23) mounted under the base plate (3) of the seat in its longitudinal median axis and a mechanical bolt (31), this rack rod (23) cooperating with a box (9) pivotally mounted on the floor (5) of the vehicle by means of a framing (6) and a brace (7), this box containing a blockable motor means (11), and in that said memory means is formed by a ring (40) having a notch (41) which cooperates with a nose (42a) of a first lever (42) which is pivotally mounted on said arms and controlled by a single control member (51) connected to said first lever (42) and to said mechanical bolt (31) by Bowden cables (45, 50).

2. Mechanism according to claim 1, characterized in that the blockable motor means mounted in the case (9) is a reversible endless screw (11) rolling in the rack (23), this endless screw been mounted on a shaft (10) and being normally blocked by a shoe (12) subjected to the effect of a second lever (14) mounted on said shaft and maintained in the blocking position by a spring (18).

3. Mechanism according to claim 2, characterized in that the blockable motor means controlling the rotation of the reversible endless screw (11) is an electric motor the feeding of which is ensured by a third lever (63) belonging to said single control device to which are coupled the ends of the Bowden cables (45, 50) controlling the bolt (31) and the lever (42).

4. Mechanism according to one of claim 2 or 3, characterized in that the blockable motor means controlling the rotation of the reversible endless screw (11) is an electric motor which is subjected to the control of an electronic memory card (72), this card being connected to said single control member enabling thereby the seat to be moved from back to front and from front to back by means of an inverting switch (70).

5. Mechanism according to one of claims 1 to 4, characterized in that the seat further comprises a backrest which is connected to the base plate and to said arms by means of a common articulation rod (36), enabling thereby the seat to be brought in a position very close to the steering wheel V1 upon the frontward movement of this seat (1) in order to clear enough space for the displacement of the passengers.

6. Mechanism according to one of claims 2 to 5, characterized in that the endless screw (11) is manually controlled.

7. Mechanism according to one of claims 2 to 6, characterized in that the endless screw (11) is controlled by means of a motor.

8. Mechanism according to claim 11 characterized in that the arms (212) are pivotally mounted at their lower part onto motor driving articulation braces (210, 211) and there is provided, in the central zone of the longitudinal median axis of the base plate (3) of the seat (1), a corner plate (207) carrying at its lower part a spindle (208) which moves in an arcuate window (202) pierced in a heart shaped part (201), this part (201) being mounted on a support fixedly connected to a framing (206) of the floor (200) of the vehicle so as to bring the seat from a normal position to a position $A_{10}$ totally pivoted towards the front to clear a space enabling the rear passengers of the vehicle seats to get in and out of said vehicle, then there is provided a pivoting bolt (203) limiting, in the upper part (202a) of the arcuate window (202), the longitudinal displacement of the seat in question, without any risk of an ill-timed pivoting of the spindle (208) in the lower part (202b) of the window (202), the control unit of the seat being realized, for the total pivoting, by means of a control button (225) controlling via the Bowden cable (45) the first lever (42) of the memory means and therefore the position of the base plate and the pivoted position of the seat for the disengagement, and simultaneously by a second Bowden cable (205) the disengagement of the bolt (203) ; then the adjustment of the trim of the base plate (3) of the seat being provided by means of a third Bowden cable (232) from a control lever (230) in order to ensure by means of a motor means the rotation of the articulation braces (210, 211).

9. Mechanism according to claim 8, characterized in that the floor (250) of the vehicle carries the framing (251) under the front zone of the seat in question (256), this framing maintaining, at its upper part, a corner plate (252) supporting a spindle (253) movable in the branches (300a, 300b) of a window (300) pierced in a flange (254) fixedly connected to the bottom part of the base plate (255) of the seat (256), the bottom part of the V-shaped window (300) with arcuate and rectilinear unequal branches (300a, 300b) being normally occupied by the mobile bolt (261) controlled by means of a forth Bowden cable (306) connected to the maneuvering button (225).

## Ansprüche

1. Vorrichtung mit einem einfachen Speicher, welche ein mechanisches Element für die Betätigung der Vorschwenkung eines Fahrzeugsitzes aufweist, wobei der besagte Sitz zumindest einen Hebel (42) aufweist, welcher mit zwei parallelen Armen (35) zusammenwirkt, die schwenkbar einerseits am hinteren Teil (36) der Sitzfläche und andererseits am Boden (5) des Fahrzeuges mittels einer einen Speicher tragenden Achse (38) schwenkbar verbunden sind, gekennzeichnet durch eine unter der Sitzfläche (3) des Sitzes in deren mittlerer Längsachse montierte gezahnte Schiene (23) und einen mechanischen Riegel (31), wobei diese gezahnte Schiene (23) mit einem Führungsgehäuse (9) zusammenwirkt, welches unter Zwischenschaltung eines Aufbaues (6) und eines Beschlages (7) am Boden (5) des Fahrzeuges angelenkt ist, wobei dieses Gehäuse ein blockierbares Antriebsorgan (11) aufweist, und der besagte Speicher durch einen Ring (40) gebildet ist, der eine Aussparung (41) aufweist, die mit einer Nase (42a) eines ersten Hebels (42) zusammenwirkt, der auf den besagten Armen angelenkt und durch ein einzelnes Betätigungsorgan (51) betätigt ist, welches mit dem ersten Hebel (42) und dem mechanischen Riegel (31) über Bowdenzüge (45, 50) verbunden ist.

2. Vorrichtung gemäß Anspruch 1, dadurch gekennzeichnet, daß das blockierbare Antriebsorgan im Führungsgehäuse (9) montiert ist, und aus einer sich in der gezahnten Schiene (23) drehenden umkehrbaren Schnecke (11) gebildet ist, wobei diese Schnecke auf einer Welle (10) montiert und normalerweise durch einen Sperrschuh (12) blockiert ist, welcher der Wirkung eines zweiten Hebels (14) unterworfen ist, der auf der besagten Welle montiert und durch eine Feder (18) in der blockierenden Position gehalten ist.

3. Vorrichtung gemäß Anspruch 2, dadurch gekennzeichnet, daß das blockierbare Antriebsorgan, welches die Drehung der umkehrbaren Schnecke (11) steuert, ein Elektromotor ist, dessen Stromversorgung über einen dritten Hebel (63) erfolgt, welcher dem einzelnen Betätigungsorgan zugeordnet ist, mit welchem die Enden der den Riegel (31) und den Hebel (42) betätigenden Bowdenzüge (45, 50) verbunden sind.

4. Vorrichtung gemäß einem der Ansprüche 2 oder 3, dadurch gekennzeichnet, daß das blockierbare Antriebsorgan, welches die Drehung der umkehrbaren Schnecke (11) hervorruft, ein Elektromotor ist, der der Steuerung durch eine elektronische Karte (72) mit Speicher unterworfen ist, wobei diese Karte mit dem besagten einzelnen Betätigungsorgan derart verbunden ist, daß eine Verstellung des Sitzes von hinten nach vorne und von vorne nach hinten mit Hilfe eines Kippschalters (70) ermöglicht ist.

5. Vorrichtung gemäß einem der Ansprüche 1 bis 4, dadurch gekennzeichnet, daß der Sitz weiters eine Rückenlehne umfaßt, welche mit der Sitzfläche und den besagten Armen mittels einer gemeinsamen Gelenkstange (36) derart verbunden ist, daß bei der Vorwärtsbewegung des Sitzes (1) dieser in eine dem Volant V1 sehr angenäherte Position gebracht werden kann, um einen ausreichenden Zwischenraum für das Ein- oder Aussteigen der Fahrgäste freizugeben.

6. Vorrichtung gemäß einem der Ansprüche 2 bis 5, dadurch gekennzeichnet, daß die Schnecke (11) von Hand betätigt wird.

7. Vorrichtung gemäß einem der Ansprüche 2 bis 6, dadurch gekennzeichnet, daß die Schnecke (11) über einen Motor betätigt wird.

8. Vorrichtung gemäß Anspruch 1, dadurch gekennzeichnet, daß die Arme (212) mit ihrem unteren Ende an Gelenkbeschlägen (210, 211) mit motorischer Betätigung angelenkt sind, und daß im zentralen Bereich der mittigen Längsachse der Sitzfläche (3) des Sitzes (1) ein Winkelstück (207) vorgesehen ist, welches in seinem unteren Abschnitt eine Achse (208) trägt, die in einem gekrümmten Langloch (202) bewegt werden kann, das in einem herzförmigen Stück (201) vorgesehen ist, wobei dieses Stück (201) auf einem mit dem Aufbau (206) am Boden (200) des Fahrzeuges verbundenen Träger in einer Weise montiert ist, daß der Sitz aus einer normalen Stellung in eine gänzlich nach vorne geneigte Stellung $A_{10}$ gebracht werden karn, um einen Zwischenraum hinter den Sitzen des Fahrzeuges für das Ein-oder Aussteigen der Fahrgäste freizugeben, wobei ein schwenkbarer Riegel (203) vorgesehen ist, welcher im oberen Abschnitt (202a) des gekrümmten Langloches (202) die Verschiebung in Längsrichtung des Sitzes ohne Risiko der ungewollten Verschwenkung der Achse (208) im unteren Abschnitt (202b) des Langloches (202) beschränkt, und wobei die Betätigungseinheit des Sitzes für die vollständige Vorschwenkung realisiert ist mit Hilfe eines Betätigungsknopfes (225), welcher über den Bowdenzug (45) den ersten Hebel (42) des Speichers betätigt, und damit die Position der Sitzfläche und die verschwenkte Position des Sitzes für die Freigabe steuert, und gleichzeitig durch einen zweiten Bowdenzug (205) die Freigabe des Riegels (203) bewirkt, und wobei die Regelung der Einstellung der Sitzfläche (3) des Sitzes über einen dritten Bowdenzug (232) vorgesehen ist, welcher von einem Betätigungshebel (230) ausgeht, um die Drehung der Gelenkbeschläge (210, 211) mit Hilfe eines Antriebsorganes zu bewirken.

9. Vorrichtung gemäß Anspruch 8, dadurch gekennzeichnet, daß der Boden (250) des Fahrzeuges den Aufbau (251) unter dem vorderen Bereich des betrachteten Sitzes (256) aufweist, wobei dieser Aufbau in seinem oberen Bereich ein Winkelstück (252) aufweist, welches eine Achse (253) aufweist, die sich in den Abschnitten (300a, 300b) eines Langloches (300) verschieben kann, welches in einer mit der Unterseite der Sitzfläche (255) des Sitzes (256) verbundenen Lasche (254) verschieben kann, wobei der untere Abschnitt des V-förmigen Langloches (300) mit ungleich ausgebildeten Abschnitten, gekrümmt und gerade (300a, 300b) normalerweise durch den beweglichen Riegel (261) eingenommen ist, der über ein mit dem Betätigungsknopf (225) verbundenen vierten Bowdenzug (306) betätigt wird.

Fig.5

Fig.6

Fig.1

Fig.7

Fig.2

Fig.3

$\uparrow F_3$

Fig.4

EP 0 306 374 B1

EP 0 306 374 B1

Fig.9

Fig.10

Fig.8

Fig.8a

Fig.11

12

Fig. 12

Fig. 12a

Fig. 13

Carte Electronique

EP 0 306 374 B1

# FIG. 14

Fig. 15

Fig. 16   Fig. 17

Fig.18

Fig.19    Fig.20